# FASCICULE DE BREVET EUROPEEN

(11) **EP 0 391 798 B1**
(45) Date de publication et mention de la délivrance du brevet: **02.06.1993**
(21) Numéro de dépôt: 90400922.2
(22) Date de dépôt: 04.04.1990
(51) Int. Cl.: G01K 7/22

(54) **Capteur de température à thermistance et procédé de fabrication de celui-ci**
Temperatursensor mit Thermistor und Verfahren zur dessen Herstellung
Temperature sensor with thermistor and method of making it

(30) Priorité: 06.04.1989 FR 8904527
(43) Date de publication de la demande: 10.10.1990
(73) Titulaire: JAEGER, F-92303 Levallois-Perret (FR)
(72) Inventeur: Bernard, Alain, F-94160 Saint Mande (FR)
(74) Mandataire: Martin, Jean-Jacques

(56) Documents cités:
- EP-A- 0 125 366
- EP-A- 0 141 580
- EP-A- 0 203 858
- EP-A- 0 239 459
- DE-A- 2 852 584
- DE-U- 8 716 868

## Description

La présente invention concerne un capteur de température, en particulier mais non exclusivement pour application aux véhicules automobiles, et un procédé de fabrication de celui-ci.

On a déjà proposé de nombreux capteurs de température.

Les capteurs de température connus comprennent généralement un boîtier en matériau thermiquement et électriquement conducteur, un support isolant pourvu d'au moins une lame de connexion fixé, par exemple par sertissage, sur le boîtier, une thermistance logée dans le boîtier et placée en contact thermique et électrique contre le fond de celui-ci, ladite thermistance étant par ailleurs reliée à la lame de connexion. De tels capteurs sont connus de EP-A-0 203 858

Les capteurs de température connus ont déjà rendu de grands services.

Cependant, ils ne donnent pas entière satisfaction. En particulier leur assemblage est en général assez délicat et les capteurs sont de ce fait assez coûteux.

Par ailleurs, les spécialistes savent que dans le cas où la caractéristique d'une thermistance ne correspond pas exactement à la courbe recherchée, il est possible en théorie de la modifier en associant une résistance à la thermistance. Cependant, en l'état actuel, à la connaissance de la Demanderesse, cette disposition n'est pas mise en oeuvre utilement dans les capteurs de température pour véhicules automobiles.

La présente invention a pour but d'améliorer la situation en proposant un nouveau capteur de température simple et économique incorporant une thermistance de mesure et une résistance de correction.

A cet effet, la présente invention propose un procédé de fabrication d'un capteur de température, caractérisé par le fait qu'il comprend les étapes consistant à :
- pincer une thermistance et une résistance de correction, en parallèle, entre deux lames élastiques en matériau électriquement conducteur portées par un support, puis
- souder la thermistance et la résistance de correction sur les lames avant de
- placer l'ensemble ainsi obtenu dans un boîtier en matériau thermiquement conducteur.

La présente invention concerne également les capteurs obtenus par la mise en oeuvre du procédé précité.

Plus précisément, les capteurs conformes à la présente invention comprennent un boîtier en matériau thermiquement conducteur, un support électriquement isolant pourvu d'au moins une lame électriquement conductrice, et une thermistance associée, les capteurs conformes à la présente invention se caractérisant essentiellement par le fait que le support en matériau électriquement isolant porte deux lames élastiques séparées en matériau électriquement conducteur, et que la thermistance de mesure et une résistance de correction sont pincées en parallèle entre les lames électriquement conductrices, et soudées sur celles-ci.

D'autres caractéristiques, buts et avantages de la présente invention apparaîtront à la lecture de la description détaillée qui va suivre, et en regard des dessins annexés donnés à titre d'exemples sur lesquels :
- la figure 1 représente une vue schématique en coupe axiale longitudinale d'un capteur de température conforme à un mode de réalisation préférentiel de la présente invention, et
- les figures 2, 3, 4 et 5 représentent, selon des vues similaires en coupe axiale longitudinale, quatre variantes de réalisation du capteur de température conforme à la présente invention

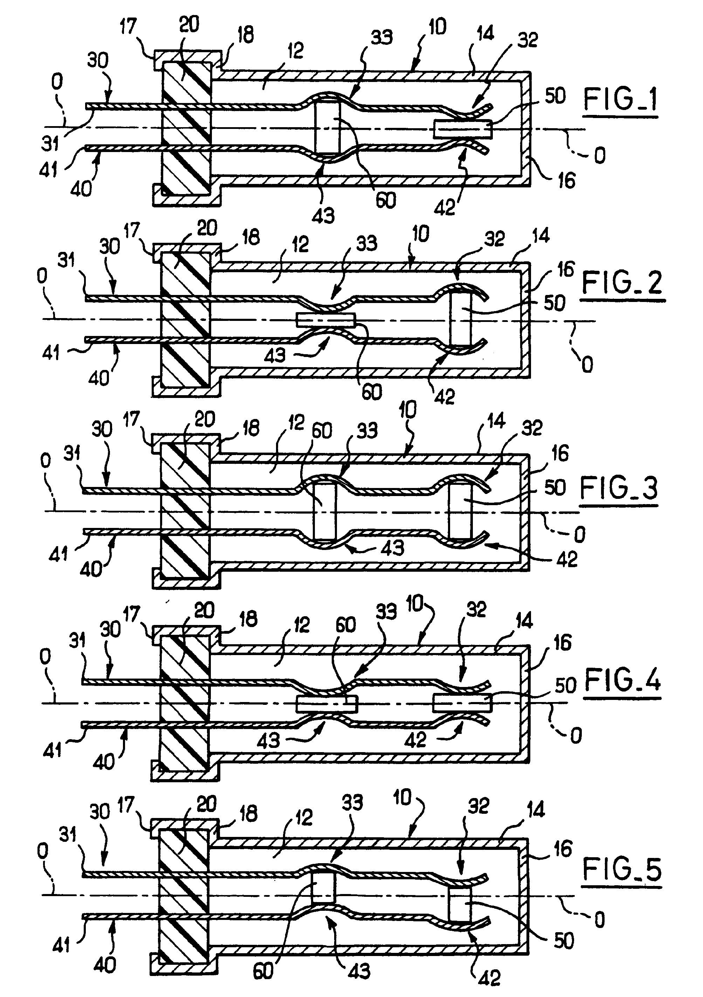

On aperçoit sur la figure 1 annexée un capteur de température comprenant un boîtier 10 réalisé en un matériau thermiquement bon conducteur.

De préférence, le boîtier 10 est réalisé en métal.

Le boîtier 10 peut faire l'objet de nombreuses variantes de réalisation. Pour cette raison, la structure du boîtier 10, connue en elle-même ne sera pas décrite plus en détail par la suite.

On notera cependant que de préférence le boîtier 10 est symétrique de révolution autour de l'axe O-O.

Par ailleurs le boîtier 10 définit une chambre borgne 12. C'est-à-dire que pour l'essentiel, le boîtier 10 est formé d'une jupe annulaire 14 obturée d'un côté par une paroi de fond 16 transversale à l'axe O-O.

Le capteur comprend également un support 20 en matériau électriquement isolant. Le support 20 est fixé par tout moyen classique approprié sur le boîtier 10, plus précisément au niveau de l'embouchure de celui-ci, c'est-à-dire à l'opposé de la paroi de fond 16. Très avantageusement le support 20 en matériau électriquement isolant est fixé sur le boîtier 10 par sertissage référencé 17.

Plus précisément encore, pour cela, tel que représenté sur les figures annexées, le support 20 prend de préférence appui sur un décrochement 18 formé par la jupe 14.

Le support 20 en matériau électriquement isolant, qui a la forme générale d'un disque transversal à l'axe O-O et centré sur celui-ci, porte deux lames séparées 30, 40. Les lames 30, 40, sont élastiques et électriquement conductrices. De préférence, elles sont réalisées en métal.

Les lames 30, 40, s'étendent sensiblement parallèlement à l'axe O-O, respectivement de part et d'autre de celui-ci. Très avantageusement les deux lames 30, 40, sont de géométrie identique.

Les lames 30, 40, émergent de part et d'autre du support 20. Les portions 31, 41, des lames émergeant du support 20 à l'extérieur du boîtier 10 servent de connexions de raccordement.

L'extrémité opposée des lames 30, 40, située à l'intérieur du boîtier 10 coopère avec une thermistance de mesure 50 et une résistance de correction 60.

De préférence, la thermistance 50 est formée d'un disque plat dont les faces principales de connexion, perpendiculaires à son axe, sont métallisées. Par ailleurs, la résistance 60 est de préférence formée d'un composant allongé type SMD ou MELF, dont les extrémités de connexion sont étamées.

On notera que comme représenté sur les figures annexées, les lames 30, 40, sont munies, sur leurs longueurs, de cambrures 32, 33 ; 42, 43 ; destinées à améliorer la tenue initiale de la thermistance 50 et de la résistance 60 entre les lames 30, 40.

Plus précisément, selon la présente invention, le capteur est réalisé selon le processus suivant.

Dans un premier temps, les lames 30, 40, sont découpées puis cambrées en 32, 33, 42, 43. La localisation et la géométrie des cambures seront précisées par la suite.

Le support 20 en matériau électriquement isolant est ensuite surmoulé sur les lames 30, 40. Une thermistance 50 est alors pincée entre les cambrures 32, 42, ménagées respectivement sur les lames 30, 40, tandis qu'une résistance est pincée en parallèle, entre les cambrures 33, 43, ménagées respectivement sur les lames 30, 40. A ce stade, l'ensemble formé par le support 20, les lames 30, 40, la thermistance 50 et la résistance 60, forme un module unitaire facile à manipuler, du fait que grâce à leur élasticité intrinsèque, les lames 30, maintiennent la thermistance 50 et la résistance 60.

La thermistance 50 et la résistance de correction 60 sont ensuite soudées sur les lames 30, 40. Cette soudure est de préférence réalisée par soudure à la vague. Si nécessaire, après soudure à la vague, la quantité excédentaire de matériau de soudure, qui pourrait court-circuiter la thermistance et/ou la résistance, est évacuée par une secousse.

Il reste alors à fixer l'ensemble comprenant le support 20, les lames 30, 40, la thermistance 50 et la résistance 60 sur le boîtier 10. Pour cela, comme indiqué précédemment, de préférence le support isolant 20 est serti en 17 sur le boîtier 10.

On notera que de préférence, avant fixation du support 20 sur le boîtier 10, un fluide bon conducteur thermique est placé dans la chambre 12 du boîtier, de sorte que la température de la thermistance recopie quasi fidèlement la température du boîtier 10.

Dans le capteur ainsi obtenu, la résistance 60 est montée électriquement en parallèle de la thermistance 50.

Le procédé de fabrication précité conforme à la présente invention a pour principal intérêt d'assurer automatiquement une tenue en position précise de la thermistance 50 et de la résistance 60, avant soudure de celles-ci, sans exiger de moyens externes complexes.

Selon le mode de réalisation représenté sur les figures annexées, la thermistance 50 est portée par l'extrémité des lames 30, 40, opposée au support 20, de telle sorte que la thermistance 50 soit placée au plus près de la paroi de fond 16 du boîtier.

En d'autres termes, la résistance 60 est placée en position intermédiaire entre le support 20 en matériau électriquement isolant et la thermistance 50.

Selon la réalisation représentée sur la figure 1, considérée actuellement comme préférentielle, les cambrures réalisées sur les lames 30, 40, avant surmoulage du support 20 sur celles-ci, sont convexes vers l'axe O-O pour les cambrures 32, 42, réalisées en extrémité des lames 30, 40, et coopérant avec la thermistance 50 et concaves vers l'axe O-O pour les cambrures 33, 43 réalisées sensiblement à mi-longueur des lames 30, 40 et destinées à coopérer avec la résistance 60.

Cependant, la géométrie de ces cambrures peut faire l'objet de nombreuses variantes. Selon la représentation de la figure 2 annexée, les cambrures 32, 42, prévues en extrémité des lames 30, 40, et destinées à coopérer avec la thermistance 50, sont concaves vers l'axe O-O, tandis que les cambrures 33, 43, ménagées sensiblement à mi-longueur des lames 30, 40, et destinées à coopérer avec la résistance 60 sont convexes vers l'axe O-O.

Selon la représentation donnée sur la figure 3 annexée, toutes les cambrures 32, 42, 33 et 43 sont concaves en direction de l'axe O-O.

De façon inverse selon la représentation donnée sur la figure 4 annexée, toutes les cambrures 32, 42, 33, 43, sont convexes vers l'axe O-O.

Selon les représentations données sur les figures 1 à 4, les lames 30, 40, sont identiques et symétriques par rapport à l'axe O-O.

Selon la représentation donnée sur la figure 5 annexée, les lames 30, 40, sont dissymétriques par rapport à l'axe O-O.

Selon cette figure 5, la cambrure 32 prévue en extrémité de la lame 30 est convexe vers l'axe O-O tandis que la cambrure 42 prévue en extrémité de la lame 40 est concave vers l'axe O-O. De façon inverse, la cambrure 30 prévue à mi-longueur de la lame 30 est convexe vers l'axe O-O tandis que la cambrure 43 prévue à mi-longueur de la lame 40 est convexe vers l'axe O-O.

A titre d'exemple, on notera que si nécessaire, une partie au moins des lames 30, 40, peut être protégée par un vernis d'épargne classique avant soudure à la vague.

On notera que dans le capteur de température conforme à la présente invention ainsi obtenu, le boîtier 10 est isolé électriquement des lames 30, 40, de la thermistance 50 et de la résistance 60 associées.

## Revendications

1. Capteur de température comprennet un boîtier (10) en matériau thermiquement conducteur, un support (20) en matériau électriquement isolant pourvu d'au moins une lame et une thermistance (50), caractérisé par le fait que le support (20) en matériau électriquement isolant porte deux lames (30, 40) séparées, élastiques, en matériau électriquement conducteur, et que la thermistance (50) et une résistance (60) sont pincées en parallèle entre les lames (30, 40) et soudées sur celles-ci.

2. Capteur de température selon la revendication 1, caractérisé par le fait que le support (20) en matériau électriquement isolant est surmoulé sur les lames (30, 40).

3. Capteur de température selon l'une des revendications 1 ou 2, caractérisé par le fait que les lames (30, 40) sont de géométries identiques et symétriques par rapport à l'axe O-O, axe autour duquel le boîtier 10 est symétrique de révolution.

4. Capteur de température selon l'une des revendications 1 à 3, caractérisé par le fait que les lames (30, 40) sont pourvues de cambrures (32, 42, 33, 43) facilitant la tenue de la thermistance (50) et de la résistance (60) avant soudure de celles-ci.

5. Capteur de température selon la revendication 4, caractérisé par le fait que les lames (30, 40) comprennent des cambrures concaves vers l'axe O-O du capteur.

6. Capteur de température selon l'une des revendications 4 et 5, caractérisé par le fait que les lames (30, 40) comprennent des cambrures convexes vers l'axe du capteur.

7. Capteur de température selon l'une des revendications 1 à 6, caractérisé par le fait que la résistance de correction (60) est une résistance SMD ou MELF à extrémités étamées.

8. Capteur de température selon l'une des revendications 1 à 7, caractérisé par le fait que la thermistance (50) a la forme d'un disque à faces de connexion métallisées.

9. Procédé de fabrication d'un capteur de température, caractérisé par le fait qu'il comprend les étapes consistant à :
- pincer une thermistance (50) et une résistance de correction (60), en parallèle, entre deux lames (30, 40) élastiques, en matériau électriquement conducteur, portées par un support (20), puis
- souder la thermistance (50) et la résistance de correction (60) sur les lames (30, 40) avant de
- placer l'ensemble ainsi obtenu dans un boîtier (10) en matériau thermiquement conducteur.

10. Procédé selon la revendication 9, caractérisé par le fait qu'il comprend l'étape initiale consistant à cambrer localement (32, 42, 33, 43) les lames (30, 40), avant de pincer la thermistance (50) et la résistance de correction (60) entre ses lames (30, 40).

11. Procédé de fabrication selon l'une des revendications 9 ou 10, caractérisé par le fait que la thermistance (50) et la résistance de correction (60) sont fixées sur les lames (30, 40) par soudure à la vague.

12. Procédé selon la revendication 11, caractérisé par le fait que, après soudure à la vague, l'ensemble formé par le support (20), les lames (30, 40), la thermistance (50) et la résistance de correction (60) soudées, est secoué pour éliminer l'excédent de matériau de soudure susceptible de court-circuiter la thermistance (50) et/ou la résistance (60).

13. Procédé selon l'une des revendications 9 à 12, caractérisé par le fait qu'une partie au moins des lames (30, 40) est protégée par un vernis d'épargne avant soudure de la thermistance (50) et de la résistance de correction (60).

## Patentansprüche

1. Temperatursensor umfassend ein Gehäuse (10) aus wärmeleitendem Material, einen Träger (20) aus elektrisch isolierendem Material, der mit mindestens einem Blatt und einem Thermistor (50) versehen ist,
dadurch **gekennzeichnet,** daß
der Träger (20) aus elektrisch isolierendem Material zwei getrennt angeordnete, elastische, aus elektrisch leitendem Material bestehende Blätter (30, 40) trägt, und daß der Thermistor (50) und ein Widerstand (60) parallel geschaltet zwischen den Blätter (30, 40) eingeklemmt und an dieselben angelötet sind.

2. Temperatursensor nach Anspruch 1, dadurch **gekennzeichnet,** daß der Träger (20) aus elektrisch isolierendem Material auf die Blätter (30, 40) aufgegossen ist.

3. Temperatursensor nach einem der Ansprüche 1 oder 2, dadurch **gekennzeichnet**, daß die Blätter (30, 40) von gleicher Form und symmetrisch bezüglich der Achse O-O sind, wobei das Gehäuse (10) rotationssymmetrisch um diese Achse ist.

4. Temperatursensor nach einem der Ansprüche 1 bis 3, dadurch **gekennzeichnet,** daß die Blätter (30, 40) mit Wölbungen (32, 42, 33, 43) versehen sind, die den Halt des Thermistors (50) und des Widerstands (60) vor dem Anlöten derselben erleichtern.

5. Temperatursensor nach Anspruch 4, dadurch **gekennzeichnet,** daß die Blätter (30, 40) Wölbungen enthalten, die konkav bezüglich der Achse O-O des Sensors sind.

6. Temperatursensor nach einem der Ansprüche 4 und 5, dadurch **gekennzeichnet,** daß die Blätter (30, 40) Wölbungen enthalten, die konvex bezüglich der Achse des Sensors sind.

7. Temperatursensor nach einem der Ansprüche 1 bis 6, dadurch **gekennzeichnet,** daß der Korrekturwiderstand (60) ein SMD- oder MELF-Widerstand mit verzinnten Anschlüssen ist.

8. Temperatursensor nach einem der Ansprüche 1 bis 7, dadurch **gekennzeichnet,** daß der Thermistor (50) die Form einer Scheibe mit metallisierten Kontaktoberflächen aufweist.

9. Verfahren zur Herstellung eines Temperatursensors, dadurch **gekennzeichnet,** daß es die folgenden Schritte umfaßt:
- Einklemmen eines Thermistors (50) und eines Korrekturwiderstands (60), die parallel geschaltet sind, zwischen zwei elastische Blätter (30, 40) aus elektrisch leitendem Material, die von einem Träger (20) getragen werden, gefolgt von
- Anlöten des Thermistors (50) und des Korrekturwiderstands (60) an die Blätter (30, 40) vor dem
- Einsetzen der so erhaltenen Anordnung in ein Gehäuse (10) aus wärmeleitendem Material.

10. Verfahren nach Anspruch 9, dadurch **gekennzeichnet,** daß es den anfänglichen Schritt des Auswölbens von Bereichen (32, 42, 33, 43) der Blätter (30, 40) vor dem Einklemmen des Thermistors (50) und des Korrekturwiderstands (60) zwischen die Blätter (30, 40) enthält.

11. Verfahren zur Herstellung nach einem der Ansprüche 9 oder 10, dadurch **gekennzeichnet**, daß der Thermistor (50) und der Korrekturwiderstand (60) auf den Blätter (30, 40) durch Wellenlöten befestigt sind.

12. Verfahren nach Anspruch 11, dadurch **gekennzeichnet,** daß nach dem Wellenlöten die Anordnung, die durch den Träger (20), die Blätter (30, 40), den Thermistor (50) und den Korrekturwiderstand (60) gebildet wird, geschüttelt wird, um das überschüssige Lötmaterial zu entfernen, das zu Kurzschluß des Thermistors (50) und/oder des Widerstands (60) führen kann.

13. Verfahren nach einem der Ansprüche 9 bis 12, dadurch **gekennzeichnet,** daß zumindest ein Teil der Blätter (30, 40) von einem Sparlack vor dem Anlöten des Thermistors (50) und des Korrekturwiderstands (60) geschützt wird.

## Claims

1. Temperature sensor comprising a casing (10) made from heat-conducting material, a support (20) made from electrically insulating material and provided with at least one blade, and a thermistor (50), characterised by the fact that the support (20) made from electrically insulating material carries two separate elastic blades (30, 40) made from electrically conductive material and that the thermistor (50) and a resistor (60) are gripped in parallel between the blades (30, 40) and are soldered to them.

2. Temperature sensor according to Claim 1, characterised by the fact that the support (20) made from electrically insulating material is moulded onto the blades (30, 40).

3. Temperature sensor according to one of Claims 1 or 2, characterised by the fact that the blades (30, 40) have identical geometries and are symmetrical with respect to the axis 0-0, about which axis the casing (10) is cylindrically symmetrical.

4. Temperature sensor according to one of Claims 1 to 3, characterised by the fact that the blades (30, 40) have curved parts (32, 42, 33, 43) facilitating the holding of the thermistor (50) and resistor (60) before these are soldered.

5. Temperature sensor according to Claim 4, characterised by the fact that the blades (30, 40) comprise curved parts which are concave towards the axis 0-0 of the sensor.

6. Temperature sensor according to one of Claims 4 and 5, characterised by the fact that the blades (30, 40) comprise curved parts which are convex towards the axis of the sensor.

7. Temperature sensor according to one of Claims 1 to 6, characterised by the fact that the correction resistor (60) is an SMD or MELF resistor with tinned ends.

8. Temperature sensor according to one of Claims 1 to 7, characterised by the fact that the thermistor (50) is in the form of a disc with metallised connecting faces.

9. Method of manufacturing a temperature sensor, characterised by the fact that it comprises the stages consisting of:
- gripping a thermistor (50) and correction resistor (60), in parallel, between two elastic blades (30, 40) made from electrically conductive material and carried by a support (20), and then
- soldering the thermistor (50) and correction resistor (60) to the blades (30, 40) before
- placing the assembly thus obtained in a casing (10) made from heat-conducting material.

10. Method according to Claim 9, characterised by the fact that it comprises the initial stage consisting of locally curving (32, 42, 33, 43) the blades (30, 40), before gripping the thermistor (50) and correction resistor (60) between its blades (30, 40).

11. Method of manufacture according to one of Claims 9 or 10, characterised by the fact that the thermistor (50) and correction resistor (60) are fixed to the blades (30, 40) by wave soldering.

12. Method according to Claim 11, characterised by the fact that, after wave soldering, the assembly formed by the support (20), the blades (30, 40), the thermistor (50) and the correction resistor (60) soldered together, is shaken to remove any excess soldering material which might short-circuit the thermistor (50) and/or the resistor (60).

13. Method according to one of Claims 9 to 12, characterised by the fact that at least part of the blades (30, 40) is protected with a long-oil varnish before soldering the thermistor (50) and correction resistor (60).
